# EUROPEAN PATENT SPECIFICATION

(11) **EP 2 951 005 B1**
(45) Date of publication and mention of the grant of the patent: **30.05.2018**
(21) Application number: 14703926.7
(22) Date of filing: 31.01.2014
(51) Int. Cl.: B29C 70/46, B29C 70/08, B29C 43/18

(54) **METHOD AND RESULTING PRODUCT OF THERMOPLASTIC MATERIAL COMPRISING A FIBRE REINFORCEMENT**
VERFAHREN UND RESULTIERENDES PRODUKT AUS THERMOPLASTISCHEM MATERIAL MIT EINER FASERVERSTÄRKUNG
PROCÉDÉ ET PRODUIT OBTENU EN MATIÈRE THERMOPLASTIQUE COMPRENANT UN RENFORCEMENT DE FIBRE

(30) Priority: 31.01.2013 NL 2010212
(43) Date of publication of application: 09.12.2015
(73) Proprietor: Polytec Composites NL B.V., 4704 RG Roosendaal (NL)
(72) Inventor: MANDOS, Rogier Theodorus Siardus Maria, NL-4708 KN Roosendaal (NL); VAN GILST, Willem Francois, NL-4462 PC Goes (NL); DE VRIES, Richard Marinus Antonius, NL-4881 HN Zundert (NL); DE KONING, Martijn Jacobus, NL-4641 HG Ossendrecht (NL)
(74) Representative: Grootscholten, Johannes A.M.
(86) International application number: PCT/NL2014/050057
(87) International publication number: WO 2014/120011

(56) References cited:
- EP-A1- 0 547 625
- EP-A2- 1 136 237
- FR-A1- 2 763 546
- US-A1- 2009 136 708
- US-A1- 2010 143 648

## Description

The present invention relates to a product of thermoplastic material, comprising a reinforcement, and a method of manufacturing the same.

It is admittedly known from e.g. WO-2005/118263 and/or EP-1996388 to arrange a textile structure of reinforcing elements of for instance steel cords inside a thermoplastic material product. The cords may be interconnected using a weave of threads or wires to ensure positioning of the cords relative to one another. In such prior art configurations the reinforcing element were always arranged centrally inside the thermoplastic material products.

These prior art reinforcements exhibit the disadvantage that the thermoplastic material, in which the reinforcement is arranged, are still required to have a considerable strength in many respects, such as tensile strength and impact resistance, if used in for instance automobiles. If the thermoplastic base material of the products surrounding the cords is too brittle, it will disintegrate on impact, lying bare the reinforcement arranged therein, such as the cord, which are then fully loaded by external forces, where these reinforcements are not designed to withstand such forces on their own, i.e. without the encapsulating thermoplastic material. If it is too rigid, it will snap. If the thermoplastic material of the product is too weak, it will provide insufficient support for the reinforcement.

Alternatively, it has been known in the art to be an option to employ reinforcement cord or fibers that are suitable for reinforcement purposes, and disperse these homogenously in the thermoplastic material product. However, the costs of such a configuration make this option unviable both commercially and technically.

Additionally reference is made here to the publication FR-2.763.546 as the closest prior art, which discloses the respective preambles of claims 1 and 11. The present invention is directed at resolving or at least reducing such problems of the prior art products, by providing a product and a method. The method relates to manufacturing a thermoplastic product in a mould comprising at least two opposing mould parts defining a cavity to at least one of press mould and injection mould the product from thermoplastic material, the method comprising: providing a fiber reinforced sheet of a fiber fabric encapsulated in a thermoplastic resin; forming the fiber reinforced sheet in correspondence with a shape of the product; and arranging the formed fiber reinforced sheet on and connected close fittingly to an outer surface of the product.

According to the invention, with a method according thereto, the precise choice of thermoplastic material for the product becomes much less critical for ensuring durability of the product, even if the product is an impact absorbing element like a bumper or the like. Also for cladding protective or sound absorbing elements and the like, similar or the same benefits can be attained. The traditional product is, as a consequence of the invention, reduced in significance to no more than a carrier for the fiber reinforced sheet (or sheets); a filler to provide body, but where the mechanical properties of the resulting combined product essentially depend on the fiber reinforced sheet (or sheets). Thus material chosen for this carrier / filler, that is comparable in shape and form to the traditional product, can be manufactured from far cheaper materials than previously considered feasible or achievable. It is further to be noted that fibers in the fiber reinforced sheet (or sheets) do not need be interconnected or arranged in a weave to maintain the fibres in a predetermined position, in the prior art preferably centrally in the interior of the moulded products. In contrast, the arrangement of these fibres in the sheet (or sheets) on the surface of the thermoplastic material products allow for the fibers to be non-woven, and/or can comprise parallel fibers, et cetera. Thereby a further reduction in costs can be achieved, while desired mechanical properties can be achieved without expensive interweave measures like in the above mentioned prior art disclosures.

It is noted here that even in applications based on press moulding, no flow of the thermoplastic material for the basic product is required. For instance when applying the present invention to a process of forming LWRT - a fluffy type of compressible and formable material having acoustic and sound damping properties - additional strength and rigidity can be imparted to a resulting product, essentially without diminishing the damping properties of the LWRT base material for the resulting combined product.

Further, the sheet (or sheets) are fixed to the traditional product, otherwise the desired mechanical (including acoustical) properties may not be achieved. This fixation will normally result from fusing, where the sheet (or sheets) bond with the surface of the product, but other mechanisms are expressly not excluded from the present invention.

Additionally, according to the present invention, the method exhibits the feature of dividing the fiber reinforced sheet in portions in shape optimized for low cut losses, said shapes being from the group at least comprising rectangles, squares and honeycomb shapes. This contributes to minimization of cut losses. Additionally, the method according to the invention exhibits the feature of welding or otherwise joining two or more fiber reinforced sheets together, prior to forming the combined fiber reinforced sheet in correspondence with a shape of the product. Thereby, cohesion of otherwise loose fiber reinforced sheets of plates can be provided.

The present invention has a multitude of further preferred embodiments, some of which are defined in the appended dependent claims as follows.

In a preferred embodiment the method according to the invention may exhibit the feature of comprising performing the steps of forming the fiber reinforced sheet and arranging the deformed sheet on the product essentially simultaneously, for example during moulding of the product. The huge advantage of the invention in general and this embodiment in particular is that an essentially singular process step allows for the manufacture of the reinforced product.

In a preferred embodiment the method according to the invention may exhibit the feature that the step of providing the fiber reinforced sheet comprises arranging the fiber reinforced sheet against a mould cavity surface of one of the mould parts. Also in this embodiment it is noted that thereby a formation of the reinforcement in conjunction with the thermoplastic base material allows for a robust ad elegant and simple realization of the benefits according to the invention.

In an embodiment having both immediately above described preferred features, the method may exhibit the further feature of arranging the fiber reinforced sheet between a pill of thermoplastic material and the mould cavity surface of said one of the mould parts. In such a very practical embodiment, the method results in moulding of the thermoplastic base material together with the sheet to create a laminate. Such an embodiment may exhibit the feature of further comprising arranging an additional fiber reinforced sheet between the pill of thermoplastic material and a mould cavity surface of the other one of the mould parts. Thus a sandwich may be created, wherein the thermoplastic material is enclosed between the fiber reinforced sheets. Thereby a better resistance to effects of shrink may be achieved.

It is possible to arrange different types of fiber reinforced sheet on opposing sides of the product. For instance, sheets on opposing sides of the product may augment or complement one another to achieve desired mechanical properties of the resulting assembled product. On opposing sides of the product, sheets incorporating different types of fibers can be arranged. Fiber orientations can be made to vary between the sheets on opposing surfaces of the product. For instance the fiber orientations of the fibers in the separate fiber reinforced sheets may be arranged to cross at an angle. The thermoplastic resin in which the fibers are incorporated may be made to vary between sheets on opposition sides on the product. The mechanical properties of the resulting product with different types of fiber reinforced sheets on opposing sides of the core material of the sheets can be designed freely by the skilled person. For instance glass and aramide fibers may be employed in or for sheets on a side or surface of the product more affected by impact or pressure, while steel and carbon fibers may prove to be more suitable to withstand tensile forces to enhance the tensile strength of the resulting product on a side more subjected to pulling forces.

In an embodiment exhibiting the features in the immediately preceding two paragraphs, the method may exhibit the further feature of pre-assembling the pill of thermoplastic material and at least one fiber reinforced sheet, prior to entering the pre-assembly into the mould. This enables a very efficient method.

In a preferred embodiment the method according to the invention may exhibit the feature that arranging the fiber reinforced sheet comprises locally arranging the fiber reinforced sheet on selected portions of the outer surface of the product. This enables the manufacturer to save on relatively expensive fiber reinforced sheet and to only apply the sheet where required. Further this embodiment allows for square or rectangular cuttings to minimize waste. Other shapes of cuttings also naturally also possible, where it is noted that the shape of such cutting is only preferably chosen to minimize cut losses.

In a preferred embodiment the method according to the invention may exhibit the feature that arranging the fiber reinforced sheet comprises arranging double or crossing fiber reinforced sheets on the outer surface of the product. In this embodiment, extra strength may be achieved at mounting points and/or through holes for inserting mounting means, like screws and bolts. Different types of fiber reinforced sheet are possible on top of each other. Likewise different fiber orientations of the superposed and possibly even crossing fiber reinforced sheets are possible

In a preferred embodiment the method according to the invention may exhibit the feature of further comprising pre-heating the fiber reinforced sheet, prior to arranging the fiber reinforced sheet on the outer surface of the product. In as far as differences occur between required heating of the sheet and the product, these can be equalized using the pre-heating of the fiber reinforced sheet.

Additionally, as noted above, the present invention relates in another aspect to a product, comprising a layer of thermoplastic material and a reinforcement, wherein the reinforcement comprises at least one fiber reinforced sheet and is arranged on and connected close fittingly to an outer surface of the layer, wherein the fiber reinforced sheet is divided into portions in at least one shape optimized for low cut losses, said shapes being from the group at least comprising rectangles, squares and honeycomb or six-cornered shapes, and wherein two or more fiber reinforced sheets are welded together. Fiber reinforced sheets are preferably welded or otherwise joined together prior to pressing or injection moulding to improve cohesion of the sheets, or of portions thereof, relative to embodiments, wherein sheets or portions thereof are loosely arranged in a press or injection mould, and thereby restrict the possibility of displacement of the sheets or the portions thereof in the mould.

In a preferred embodiment the product according to the invention may exhibit the feature that the fiber reinforced sheet comprises essentially continuous fibers, preferably or just by way of example an Organo sheet or otherwise sometimes referred to as Organoblech, such as Tepex ® from Bond Laminates GmbH.

In a preferred embodiment the product according to the invention may exhibit the feature that fiber components of the fiber reinforced sheet comprises at least one type of fibers from the group, which at least comprises: steel cords; natural fibers; glass fibers; carbon fibers; and aramid fibers.

In a preferred embodiment the product according to the invention may exhibit the feature that the thermoplastic material of the product is at least one relatively inexpensive material from the group comprising GMT, D-LFT, LWRT, and recycle material.

All combinations of features are considered feasible within the disclosure of the present invention herein.

After the foregoing general indication of the invention and preferred embodiments thereof, referring to the appended claims, herein below a description follows of the appended drawing, where specific non-limiting embodiments of the invention are disclosed in more detail. The appended drawing and the description thereof are, however, by no means to be interpreted as more limiting on the scope of protection for the present invention then the appended claims, and additional and alternative embodiments are expressly not excluded from the scope of protection merely in view of any differences with the appended drawings and the description thereof. In the drawing:
Fig. 1 shows a sandwich according to the present invention, prior to being arranged in a mould;
Fig. 2 shows a bowl, capable of being formed from the pill according to figure 1;
Fig. 3 shows an alternative two layer laminate embodiment relative to the sandwich of figure 1;
Fig. 4 shows a pipe section, capable of being formed from the two layer laminate according to figure 3 with one sided reinforcement;
Figures 5, 6 and 7 show in respective views cover plate with mountings for mounting the cover plate, where the mountings are reinforced superficially, according to the present invention; and
figure 8 shows a schematic view of a method for assembling a product according to the present invention.

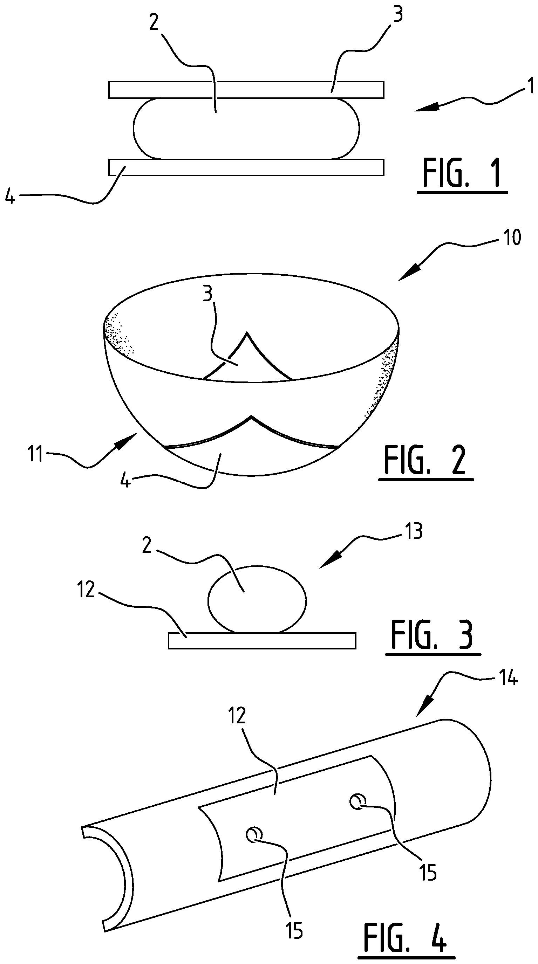

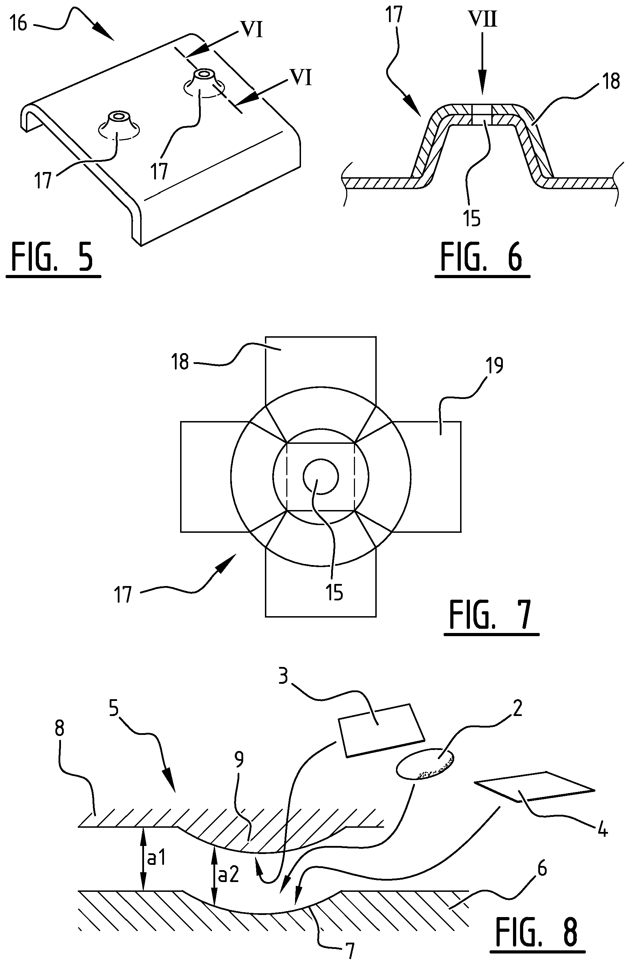

In figure 1 sandwich 1 is shown, comprising a quantity of thermoplastic material 2, with an upper fiber reinforced sheet 3 and a lower fiber reinforced sheet 4. This sandwich 1 is prepared before introduction thereof into a mould, for instance a press mould 5, like the one shown in figure 8. Alternatively, and as shown in figure 8, the sheets 3, 4 and the quantity of thermoplastic material to can be introduced separately into the mould 5.

Irrespective of whether the sandwich 1 of figure 1 is introduced or the separate components thereof are inserted in correspondence with the schematic representation of figure 8, a lower mould part 6 has a depression 7 and an upper mould part 8 has a protrusion 9. In an opened state of the mould 5, the distance a2 is smaller than the distance a1, to define a bowl shaped cavity between the lower mould part 6 and the upper mould part 8. A bowl shaped product 10, as shown in figure 2, can thus be manufactured in the mould 5. The bowl shaped product 10 in figure 2 has the considerably more articulated shape and form than the schematic representation of figure 8, and a bottom 11 of the bowl shaped product 10 is reinforced by the fiber reinforced sheets 3, 4. As indicated above, the sandwich 1 can be pre produced and inserted into the mould 5, or sheet 3 can be applied against the protrusion 9 of the upper mould 8 and sheet for can be applied in the depression 7 of the law mould part 6. Any measure or step can be taken to ensure that the sheets 3, 4 and here to the protrusion 9 and depression 7, respectively. In an opened state of the mould 5 a quantity of thermoplastic material 2 can be introduced into the mould, at least partially between the sheets 3, 4. It will be immediately evident, that the sheets 3, 4 in the final product of the bowl shaped product 10 are arranged on or at most in the outer surfaces of the resulting product or bowl shaped product 10, which is meant to include the bottom surface of the bowl shaped product 10, where the sheet 3 is arranged.

Figures 3 and 4 show an alternative embodiment of a similar quantity of thermoplastic material 2, which is arranged on a single fiber reinforced sheet 12. Consequently, the two layer laminate 13 is pre-produced. In a similar fashion as described in conjunction with and through reference to figure 8, such a pre-produced two layer laminate 13 can be introduced into a mould 5 in an opened state. Alternatively, the single sheet 12 and quantity of thermoplastic material 2 can be individually and sequentially introduced into the open mould 5. Figure 4 shows a pipe section 14, capable of being formed from the two layer laminate 13 according to figure 3 with one sided reinforcement provided by sheet 12. Naturally, to manufacture this pipe section 14, a different mould needs to be employed than the one of figure 8.

Additionally, it is noted here that the fiber reinforced sheet 12 is arranged at the particular location on the pipe section 14 in view of required are desired reinforcement of the pipe section 14, which may have become necessary through the application of holes 15. At the position of the holes 15, the fiber reinforced sheet 12 provides additional support for the pipe section 14, in particular if for example the holes 15 are used to accommodate mounting means such as bolts or screws.

Figures 5, 6 and 7 show in respective views a cover plate 16 with mountings 17 for mounting the cover plate 16, where the mountings 17 are reinforced superficially, according to the present invention. At the location of the mountings 17, as indicated in the cross sectional view of figure 6, fiber reinforced sheet 18 can be provided on or in the surface of the cover plate 16 at the location of the mounting 17, where at the top of the mounting 17 through a hole 15 is provided to allow accommodation of bolts, screws and other not-shown mounting means. From the top few according to figure 7 it becomes apparent that not only sheet 18 is provided, but also an additional sheet 19, which is also, like sheet 18, fiber reinforced. Together, sheets 18, 19 reinforced the mounting 17 for accommodating in a through a hole 15 thereof any suitable mounting means, such as bolts and screws. In this particular instance, the separate fiber reinforced sheets 18, 19 are arranged in a crossing manner on the same side of the resulting product.

It should be noted here, that the present invention can be embodied to exhibit numerous additional and/or alternative features relative to the specific figure description above, referring to the appended drawing, but that such further embodiments and additional and/or alternative features must be considered to reside within the scope of protection for the present invention in as far as these features still comply with the requirements of the invention according to the definition in the appended claims.

## Claims

1. A method of manufacturing a thermoplastic product (10) in a mould (5), comprising at least two opposing mould parts (6, 8) defining a cavity to at least one of press mould and injection mould the product (10) from thermoplastic material, the method comprising:
- providing a fiber reinforced sheet of a fiber fabric encapsulated in a thermoplastic resin;
- forming the fiber reinforced sheet in correspondence with a shape of the product (10); and
- arranging the formed fiber reinforced sheet on and connected close fittingly to an outer surface of the product (10),
**CHARACTERISED BY**
dividing the fiber reinforced sheet in portions (3; 4)in shape optimized for low cut losses, said shapes being from the group at least comprising rectangles, squares and honeycomb or six-cornered shapes, and
joining two or more fiber reinforced sheets or portions thereof together, for example by welding, prior to forming the combined fiber reinforced sheet in correspondence with a shape of the product (10).

2. The method according to claim 1, comprising performing the steps of forming the fiber reinforced sheet and arranging the deformed sheet on the product (10) essentially simultaneously, for example during moulding of the product (10).

3. The method according to claim 1 or 2, wherein the step of providing the fiber reinforced sheet comprises arranging the fiber reinforced sheet against a mould cavity surface of one of the mould parts (6, 8).

4. The method according to claims 2 and 3, comprising arranging the fiber reinforced sheet between a pill (2) of thermoplastic material and the mould cavity surface of said one of the mould parts (6, 8).

5. The method according to claim 4, further comprising arranging an additional fiber reinforced sheet between the pill (2) of thermoplastic material and a mould cavity surface of the other one of the mould parts (6, 8).

6. The method according to claim 5, comprising arranging different types of fiber reinforced sheet on opposing mould cavity surfaces to be arranged on opposing sides of the product (10).

7. The method according to claim 4, 5 or 6, comprising pre-assembling the pill (2) of thermoplastic material and at least one fiber reinforced sheet, prior to entering the pre-assembly into the mould (5).

8. The method according to any of the preceding claims, wherein arranging the fiber reinforced sheet comprises locally arranging the fiber reinforced sheet on selected portions of the outer surface of the product (10).

9. The method according to any of the preceding claims, wherein arranging the fiber reinforced sheet comprises arranging double or crossing fiber reinforced sheets on the outer surface of the product (10).

10. The method according to any of the preceding claims, further comprising pre-heating the fiber reinforced sheet, prior to arranging the fiber reinforced sheet on the outer surface of the product (10).

11. A product (10), comprising a layer of thermoplastic material (2) and a reinforcement, wherein the reinforcement comprises at least one fiber reinforced sheet and is arranged on and connected close fittingly to an outer surface of the layer of thermoplastic material (2),
CHARACTRISED IN THAT
the fiber reinforced sheet is divided into portions (3; 4) in at least one shape optimized for low cut losses, said shapes being from the group at least comprising rectangles, squares and honeycomb or six-cornered shapes, and
wherein two or more fiber reinforced sheets or portions thereof are joined together, for example by welding.

12. The product according to claim 11, wherein the fiber reinforced sheet comprises essentially continuous fibers, preferably a sheet such as Tepex ® from Bond Laminates GmbH, and/or Organoblech in general.

13. The product according to claim 11 or 12, wherein fiber components of the fiber reinforced sheet comprises at least one type of fibers from the group, which at least comprises: steel cords; natural fibers; carbon fibers; glass fibers; and aramid fibers.

14. The product according to any of the preceding claims 11-13, wherein the thermoplastic material of the product is at least one relatively inexpensive material from the group comprising GMT, D-LFT, LWRT and recycle material.

15. The product according to any of the preceding claims 11-13, wherein the portions (3; 4) of fiber reinforced sheet or portions thereof are welded together, prior to forming the combined fiber reinforced sheet, in correspondence with a shape of the product (10).

## Patentansprüche

1. Verfahren zur Herstellung eines thermoplastischen Produkts (10) in einer Form (5), die wenigstens zwei entgegengesetzte Formteile (6, 8) aufweist, die einen Hohlraum definieren, um das Produkt (10) aus thermoplastischem Material press- und/oder spritzzuformen, wobei das Verfahren aufweist:
- Bereitstellen einer faserverstärkten Schicht aus einem Faserstoff, der in einem thermoplastischen Harz verkapselt ist;
- Ausbilden der faserverstärkten Schicht entsprechend einer Form des Produkts (10); und
- Anordnen der ausgebildeten faserverstärkten Schicht auf einer Außenoberfläche des Produkts (10) und dicht angepasst mit dieser verbunden,
**gekennzeichnet durch** Teilen der faserverstärkten Schicht in Abschnitte (3; 4) in eine Form, die für geringe Schnittverluste optimiert ist, wobei die Formen aus der Gruppe sind, die wenigstens Rechtecke, Quadrate und Honigwaben- oder sechseckige Formen aufweist, und Miteinanderverbinden von zwei oder mehr faserverstärkten Schichten oder deren Abschnitte zum Beispiel durch Schweißen vor dem Ausbilden der kombinierten faserverstärkten Schicht entsprechend einer Form des Produkts (10).

2. Verfahren nach Anspruch 1, das das Durchführen der Schritte zum Ausbilden der faserverstärkten Schicht und das im Wesentlichen gleichzeitige Anordnen der verformten Schicht auf dem Produkt (10) zum Beispiel während des Formens des Produkts (10) aufweist.

3. Verfahren nach Anspruch 1 oder 2, wobei der Schritt zur Bereitstellung der faserverstärkten Schicht das Anordnen der faserverstärkten Schicht gegen eine Formhohlraumoberfläche eines der Formteile (6, 8) aufweist.

4. Verfahren nach Anspruch 2 und 3, das das Anordnen der faserverstärkten Schicht zwischen einer Pille (2) aus thermoplastischem Material und einer Formhohlraumoberfläche des einen der Formteile (6, 8) aufweist.

5. Verfahren nach Anspruch 4, das ferner das Anordnen einer zusätzlichen faserverstärkten Schicht zwischen der Pille (2) aus thermoplastischem Material und einer Formhohlraumoberfläche des anderen der Formteile (6, 8) aufweist.

6. Verfahren nach Anspruch 5, das das Anordnen verschiedener Arten von faserverstärkten Schichten auf entgegengesetzten Formhohlraumoberflächen, die auf entgegengesetzten Seiten des Produkts (10) angeordnet werden sollen, aufweist.

7. Verfahren nach Anspruch 4, 5 oder 6, das das Vormontieren der Pille (2) aus thermoplastischem Material und wenigstens einer faserverstärkten Schicht vor dem Einbringen der Voranordnung in die Form (5) aufweist.

8. Verfahren nach einem der vorhergehenden Ansprüche, wobei das Anordnen der faserverstärkten Schicht das lokale Anordnen der faserverstärkten Schicht auf ausgewählten Abschnitten der Außenoberfläche des Produkts (10) aufweist.

9. Verfahren nach einem der vorhergehenden Ansprüche, wobei das Anordnen der faserverstärkten Schicht das Anordnen doppelter oder sich kreuzender faserverstärkter Schichten auf der Außenoberfläche des Produkts (10) aufweist.

10. Verfahren nach einem der vorhergehenden Ansprüche, das ferner das Vorheizen der faserverstärkten Schicht vor dem Anordnen der faserverstärkten Schicht auf der Außenoberfläche des Produkts (10) aufweist.

11. Produkt (10), das eine Schicht aus thermoplastischem Material (2) und eine Verstärkung aufweist, wobei die Verstärkung wenigstens eine faserverstärkte Schicht aufweist und auf einer Außenoberfläche der Schicht aus thermoplastischem Material angeordnet und dicht daran angepasst mit dieser verbunden ist,
**dadurch gekennzeichnet, dass**
die faserverstärkte Schicht in Abschnitte (3; 4) in wenigstens eine Form, die für geringe Schnittverluste optimiert ist, geteilt ist, wobei die Formen aus der Gruppe sind, die wenigstens Rechtecke, Quadrate und Honigwaben oder sechseckige Formen aufweist, und
wobei zwei oder mehr faserverstärkte Schichten oder deren Abschnitte zum Beispiel durch Schweißen miteinander verbunden sind.

12. Produkt nach Anspruch 11, wobei die faserverstärkte Schicht im Wesentlichen zusammenhängende Fasern, vorzugsweise eine Schicht, wie etwa Tepex® von der Bond Laminates GmbH und/oder Organoblech im Allgemeinen aufweist.

13. Produkt nach Anspruch 11 oder 12, wobei Faserkomponenten der faserverstärkten Schicht wenigstens eine Art von Fasern aus der Gruppe aufweisen, welche wenigstens aufweist: Stahlseile; Naturfasern; Kohlefasern; Glasfasern; und Aramidfasern.

14. Produkt nach einem der vorhergehenden Ansprüche 11 - 13, wobei das thermoplastische Material des Produkts wenigstens ein relativ kostengünstiges Material aus der Gruppe ist, die aus GMT, D-LFT, LWRT und wiederverwertetem Material besteht.

15. Produkt nach einem der vorhergehenden Ansprüche 11- 13, wobei die Abschnitte (3; 4) der faserverstärkten Schicht oder deren Abschnitte vor dem Ausbilden der kombinierten faserverstärkten Schicht entsprechend einer Form des Produkts (10) miteinander verschweißt werden.

## Revendications

1. Procédé de fabrication d'un produit thermoplastique (10) dans un moule (5), comprenant au moins deux parties de moule opposées (6, 8) définissant une cavité pour l'au moins un d'un moulage à compression et d'un moulage à injection du produit (10) à partir de matière thermoplastique, le procédé comprenant :
- la fourniture d'une feuille renforcée de fibres d'un tissu de fibre enrobé dans une résine thermoplastique ;
- la formation de la feuille renforcée de fibres en correspondance avec une forme du produit (10) ; et
- l'agencement de la feuille renforcée de fibres formée sur une surface extérieure du produit (10) et reliée de façon ajustée étroitement à celle-ci,
**caractérisé par**
la division de la feuille renforcée de fibres en parties (3 ; 4) de forme optimisée pour de faibles pertes de découpe, lesdites formes faisant partie du groupe comprenant au moins les rectangles, les carrés et les formes alvéolaires ou à six coins, et
la jonction de deux feuilles renforcées de fibres ou parties de celles-ci ou plus ensemble, par exemple par soudage, avant la formation de la feuille renforcée de fibres combinée en correspondance avec une forme du produit (10).

2. Procédé selon la revendication 1, comprenant la réalisation des étapes de formation de la feuille renforcée de fibres et d'agencement de la feuille déformée sur le produit (10) essentiellement simultanément, par exemple, pendant le moulage du produit (10).

3. Procédé selon la revendication 1 ou 2, dans lequel l'étape de fourniture de la feuille renforcée de fibres comprend l'agencement de la feuille renforcée de fibres contre une surface de cavité de moule d'une des parties de moule (6, 8).

4. Procédé selon les revendications 2 et 3, comprenant l'agencement de la feuille renforcée de fibres entre un comprimé (2) de matière thermoplastique et la surface de cavité de moule de ladite une des parties de moule (6, 8).

5. Procédé selon la revendication 4, comprenant en outre l'agencement d'une feuille renforcée de fibres supplémentaire entre le comprimé (2) de matière thermoplastique et une surface de cavité de moule de l'autre des parties de moule (6, 8).

6. Procédé selon la revendication 5, comprenant l'agencement de différents types de feuille renforcée de fibres sur des surfaces de cavité de moule opposées devant être agencés sur des côtés opposés du produit (10).

7. Procédé selon la revendication 4, 5 ou 6, comprenant le pré-assemblage du comprimé (2) de matière thermoplastique et d'au moins une feuille renforcée de fibres, avant d'introduire le pré-assemblage dans le moule (5).

8. Procédé selon l'une quelconque des revendications précédentes, dans lequel l'agencement de la feuille renforcée de fibres comprend l'agencement local de la feuille renforcée de fibres sur des parties sélectionnées de la surface extérieure du produit (10).

9. Procédé selon l'une quelconque des revendications précédentes, dans lequel l'agencement de la feuille renforcée de fibres comprend l'agencement de feuilles renforcées de fibres doubles ou entrecroisées sur la surface extérieure du produit (10).

10. Procédé selon l'une quelconque des revendications précédentes, comprenant en outre le préchauffage de la feuille renforcée de fibres, avant agencement de la feuille renforcée de fibres sur la surface extérieure du produit (10).

11. Produit (10), comprenant une couche de matière thermoplastique (2) et un renforcement, dans lequel le renforcement comprend au moins une feuille renforcée de fibres et est agencé sur une surface extérieure de la couche de matière thermoplastique (2) et relié de façon ajustée étroitement à celle-ci,
**caractérisé en ce que**
la feuille renforcée de fibres est divisée en parties (3 ; 4) en au moins une forme optimisée pour de faibles pertes de découpe, lesdites formes faisant partie du groupe comprenant au moins les rectangles, les carrés et les formes alvéolaires ou à six coins, et
dans lequel deux feuilles renforcées de fibre ou parties de celles-ci ou plus sont jointes ensemble, par exemple, par soudage.

12. Produit selon la revendication 11, dans lequel la feuille renforcée de fibres comprend des fibres essentiellement continues, de préférence une feuille telle que Tepex® de Bond Laminates GmbH et/ou Organoblech en général.

13. Produit selon la revendication 11 ou 12, dans lequel les composants de fibre de la feuille renforcée de fibres comprennent au moins un type de fibres faisant partie du groupe, qui comprend au moins : les câbles d'acier ; les fibres naturelles ; les fibres de carbone ; les fibres de verre et les fibres d'aramide.

14. Produit selon l'une quelconque des revendications 11 à 13 précédentes, dans lequel la matière thermoplastique du produit est au moins une matière relativement peu coûteuse faisant partie du groupe comprenant GMT, D-LFT, LWRT et matière de recyclage.

15. Produit selon l'une quelconque des revendications 11 à 13 précédentes, dans lequel les parties (3 ; 4) de feuille renforcée de fibres ou des parties de celles-ci sont soudées ensemble, avant formation de la feuille renforcée de fibres combinée, en correspondance avec une forme du produit (10).
